(19) Europäisches Patentamt
European Patent Office
Office européen des brevets

(11) Numéro de publication: **0 188 969**
**B1**

(12) # FASCICULE DE BREVET EUROPÉEN

(45) Date de publication du fascicule du brevet: **06.12.89**

(51) Int. Cl.⁴: **B 01 J 2/30**, C 05 C 1/02, C 05 G 3/00

(21) Numéro de dépôt: **85402622.6**

(22) Date de dépôt: **24.12.85**

(54) **Procédé et composition pour l'antimottage des sels ou des engrais non pulvérulents.**

(30) Priorité: **24.12.84 FR 8419789**

(43) Date de publication de la demande: **30.07.86 Bulletin 86/31**

(45) Mention de la délivrance du brevet: **06.12.89 Bulletin 89/49**

(84) Etats contractants désignés: **AT BE CH DE FR GB IT LI LU NL SE**

(56) Documents cité:
**FR-A-2 155 883**
**GB-A-705 270**
**US-A-3 190 774**

(73) Titulaire: **COMPAGNIE FRANCAISE DE PRODUITS INDUSTRIELS, 28, Boulevard Camélinat, F-92233 Gennevilliers (FR)**

(72) Inventeur: **Schapira, Joseph, 32, rue Miollis, F-75007 Paris (FR)**
Inventeur: **Ruel, Jacques, 6, rue du Général Leclerc, F-95210 Saint- Gratien (FR)**
Inventeur: **Cheminaud, Jean- Claude, 10, rue Henri Dunand, F-95220 Herblay (FR)**
Inventeur: **Petitbon, Pascal, 13, rue Louis Castel, F-92230 Gennevilliers (FR)**

(74) Mandataire: **Koch, Gustave, Cabinet PLASSERAUD 84, rue d'Amsterdam, F-75009 Paris (FR)**

EP 0 188 969 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

**Description**

L'invention a pour objet un procédé et une composition pour l'antimottage des sels ou des engrais non pulvérulents.

On entend par le terme "engrais" aussi bien les engrais simples que les engrais complexes et par l'expression sels ou engrais "non pulvérulents", tout type de présentation de ces produits dans lequel ceux-ci sont sous forme de granulés, de grains, de billes, de petits cylindres ou de prills obtenus à l'aide de procédés désignés dans la technique par "prilling", "granulation au tambour, à l'assiette, à la vis, ou au lit fluidisé".

Les susdits sels pouvant être traités dans le cadre de l'invention comprennent notamment le phosphate de calcium, le chlorure et le nitrate de potassium.

Les susdits engrais "simples" comprennent l'urée, le sulfate d'ammonium, et surtout le nitrate d'ammonium; dans ce dernier cas, il peut s'agir de nitrate d'ammonium pur, c'est-à-dire dont le titre (% d'azote nitrique et ammoniacal en poids par rapport à la masse de l'engrais) est de 34,8 % ou de nitrate d'ammoniaque dilué et dont le titre est ramené à 33,5 %, 30 %, 27,5 %, 20 % et ainsi de suite.

Les engrais dits "complexes" sont des engrais alliant à l'azote d'autres éléments nutritifs des végétaux; ils comprennent les engrais du type N.P.K. (engrais apportant à la plante de l'azote, du phosphore et du potassium) et toute combinaison deux à deux de ces éléments, éventuellement associés aux oligo-éléments nécessaires.

Les engrais du type N.P.K. sont définis par leur titre en azote exprimé en % en poids d'azote par rapport à l'engrais et/ou par leur titre en phosphore exprimé en % en poids d'anhydride phosphorique par rapport à l'engrais et/ou par leur titre en potassium exprimé en en poids d'oxyde de potassium par rapport à l'engrais.

Il est bien connu que les susdits sels et engrais, lorsqu'ils sont stockés soit en vrac sous forme de tas pouvant atteindre 15 à 20 m de hauteur, soit en sacs empilés sur plusieurs hauteurs pouvant atteindre 12 m, ont tendance à motter, c'est-à-dire à se prendre en masse.

Il s'agit d'un phénomène complexe mal connu, qui provoque une cohésion importante entre les grains ou prills, les empêchant de rouler librement et provoquant un mottage, c'est-à-dire une prise en masse du tas d'autant plus importante que l'on est proche du fond du tas ou de l'empilement de sacs; cette prise en masse peut parfois atteindre des proportions telles que l'engrais prenne la forme d'une masse dure compacte ou de blocs importants extrêmement difficiles à déliter; l'engrais n'est alors plus utilisable tel quel mais doit être concassé et recyclé, ce qui occasionne un important surcoût d'exploitation aux fabricants d'engrais.

L'une des causes possibles du mottage, notamment pour les engrais très hygroscopiques et déliquescents, comme le nitrate d'ammonium, réside dans les variations d'humidité et de température à la surface des grains, phénomènes qui provoquent une dissolution superficielle de l'engrais et sa recristallisation avec des pontages cristallins entre les grains voisins lors du séchage. Quand on soumet de petites quantités de nitrate d'ammonium (de l'ordre de 100 grammes) à une pression et à des cycles d'humidité et de température, on observe bien de tels phénomènes. Cependant, cette déliquescence des grains d'engrais n'est pas la cause réelle du mottage puisqu'il est couramment admis qu'au coeur d'un tas, là où le mottage est maximum, il n'y a pas d'échange d'humidité avec l'air extérieur ambiant et que le tas est adiabatique; l'explication qui vient d'être fournie ne vaut donc que pour la couche très superficielle d'un tas.

Pour lutter contre ce mottage ou prise en masse, on a déjà proposé d'avoir recours à des enrobants minéraux éventuellement associés à des produits organiques tels que des tensio-actifs, des huiles, des polymères et autres on a également proposé différents traitements organiques, sans enrobant minéral, au moyen de solutions d'amines dans l'huile, de tensio-actifs associés à des cires et autres.

On a également déjà proposé (brevet britannique N° 705 270), pour lutter contre le mottage d'engrais, un produit contenant en solution aqueuse uniquement un silicate d'alcalin, la dilution de cette solution aqueuse étant telle qu'une étape de séchage est nécessaire, ce qui retire à ce procédé, au demeurant peu efficace, son intérêt du point de vue économique.

On a également déjà proposé (brevet US-1 932 434), pour lutter contre le mottage des poudres de nitrate d'ammonium, de modifier la cristallisation du nitrate d'ammonium en incorporant une solution de silicate de sodium concentré dans la solution de nitrate d'ammonium avant sa concentration finale, le nitrate étant obtenu sous forme de poudre de tels nitrates pulvérulents ne sont pratiquement plus commercialisés et ne répondent plus aux besoins actuels.

On a également proposé l'emploi comme antimottants de silicates insolubles dans l'eau ou d'alumino-silicates insolubles (brevets US-2 407 151, 2 903 349 et 3 190 774), les silicates ou alumino-silicates insolubles dans l'eau étant éventuellement associés à des tensio-actifs; une variante de cette technique (brevet US-2 660 541) consiste à précipiter l'alumino-silicate insoluble à la surface de l'engrais dont la température est supérieure à 105°C en y pulvérisant une dispersion d'alumine finement broyée et dispersée dans un silicate alcalin. A cette température, l'alumine réagit sur le silicate alcalin et forme un alumino-silicate insoluble.

La mise en oeuvre sur l'engrais des silicates et silico-aluminates insolubles dans l'eau, en général dans un enrobeur, n'en permet pas une répartition très homogène et même en présence de tensio-actif ou d'huile on n'obtient pas une action antimottante totalement satisfaisante dans tous les cas; d'ailleurs, l'utilisation de quantités de tensio-actifs plus importantes pour arriver à un résultat acceptable peut être néfaste à l'égard des propriétés mécaniques des grains d'engrais. De plus, ces traitements sont souvent extrêmement poussiéreux.

L'invention a pour but, surtout, de remédier aux inconvénients de l'art antérieur et de fournir un procédé et une composition perfectionnés d'antimottage pour sels et engrais non pulvérulents du genre en question.

Et il est du mérite de la Société Demanderesse d'avoir pu mettre au point, à l'issue de recherches appro-mécaniques des grains d'engrais. De plus, ces traitements sont souvent extrêmement poussiéreux.

L'invention a pour but, surtout, de remédier aux inconvénients de l'art antérieur et de fournir un procédé et une composition perfectionnés d'antimottage pour sels et engrais non pulvérulents du genre en question.

Et il est du mérite de la Société Demanderesse d'avoir pu mettre au point, à l'issue de recherches approfondies, un procédé propre à permettre de façon inattendue un antimottage très efficace des sels et engrais non pulvérulents du genre en question, ce procédé étant caractérisé par le fait que l'on applique sur les particules constitutives de l'engrais, après séchage au moins partiel et avant stockage, à un moment où lesdites particules sont sous leur forme définitive et ont acquis la presque totalité de leur propriétés mécaniques finales, une quantité efficace:

- soit d'une solution aqueuse de silicate alcalin ou d'amine dont la teneur en matières sèches est de 15 à 60 % en poids, cette application étant éventuellement précédée ou suivie d'une application de tensio-actif anionique sous forme de sel d'alcalin, d'alcalino-terreux ou d'amine,
- soit d'une solution aqueuse de silicate alcalin ou d'amine comprenant un tensio-actif anionique sous forme de sel d'alcalin, d'alcalino-terreux ou d'amine,
- soit d'une solution aqueuse de silicate alcalin ou d'amine associé à un tensio-actif anionique sous forme de sel d'alcalin, d'alcalino-terreux ou d'amine, en solution huileuse ou aqueuse,
- soit d'un des produits précédents, associé à une huile, une cire, une vaseline, une paraffine ou à un fuel et/ou éventuellement à un enrobant minéral inerte.

La composition d'antimottage conforme à l'invention est, quant à elle, caractérisée par le fait qu'elle est à base d'une solution aqueuse d'un silicate alcalin ou d'amine et d'au moins un tensio-actif anionique sous forme de sel d'alcalin, d'alcalino-terreux ou d'amine, en solution aqueuse ou huileuse, les proportions respectives pondérales de silicate et de tensio-actif étant de 10/90 à 90/10.

La susdite composition peut également comporter une quantité efficace de fuel, de paraffine, de cire, de vaseline ou d'huile, l'ensemble se présentant sous la forme d'une émulsion.

Une telle émulsion peut comporter, conformément à l'invention,

- de 1,6 à 21,6 % sur sec de silicate alcalin ou d'amine,
- de 21,6 à 1,6 % sur sec de tensio-actif,
- de 40 à 60 % de fuel, cire ou huile,

le complément à 100 étant constitué par de l'eau.

Mises à part les susdites dispositions, l'invention vise encore d'autres dispositions qui s'utilisent de préférence en même temps et dont il va être question.

Elle pourra être bien comprise à l'aide du complément de description qui suit et des exemples, lesdits complément de description et exemples illustrant des modes de réalisation avantageux.

Se proposant, par conséquent, de réaliser l'antimottage de sels et d'engrais non pulvérulents du genre en question, on s'y prend comme suit ou de façon équivalente.

On applique par pulvérisation aux grains ou prills ou sphérules de sel ou engrais sous leur forme définitive, c'est-à-dire après prilling ou granulation et séchage, quand le grain a acquis la presque intégralité de ses propriétés mécaniques finales et avant stockage, au moins une solution de silicate alcalin ou d'amine dont la teneur en matières sèches varie entre 15 et 60 % en poids et un tensio-actif anionique sous forme de sel en solution aqueuse ou en solution dans une huile, une cire, une paraffine, une vaseline ou un fuel. Le tensio-actif anionique sous forme de sel peut être mélangé au silicate, formant alors une composition conforme à l'invention, ou être mis en oeuvre avant ou après le silicate.

Enfin, il est possible d'associer aux susdits traitements un traitement avec une huile, un fuel et/ou un enrobant minéral inerte.

Plus particulièrement, dans le cas des nitrates d'ammonium granulés ou prillés dont le titre varie entre 33,5 % et 34,8 %, le procédé selon l'invention est avantageusement appliqué sur l'engrais refroidi en sortie du tambour refroidisseur, en fin de lit fluidisé ou de tout autre système de refroidissement. La température de l'engrais est alors en général inférieure à 40°C et souvent inférieure à 32°C qui est la température du premier point de transition de l'engrais. L'humidité du grain est alors en général inférieure à 1 %, couramment comprise entre 0,1 et 0,4 % et le grain de nitrate a acquis la presque totalité de ses propriétés mécaniques finales.

Dans certaines installations particulières, le procédé selon l'invention peut être mis en oeuvre sur l'engrais partiellement refroidi, par exemple à une température comprise entre 80°C et 40°C. L'engrais traité est ensuite à nouveau refroidi jusqu'à la température de stockage en silo.

Dans le cas des nitrates d'ammonium dont le titre en azote est inférieur à 33,5 % et qui, dans la majorité des cas, contiennent de la craie, le procédé selon l'invention est mis en oeuvre après dilution au titre voulu et après granulation ou prilling, séchage et refroidissement. L'humidité résiduelle est en général inférieure à 2 % et pratiquement comprise entre 0,1 et 1 %.

Après refroidissement, la température du grain est en général inférieure à 50°C. Le grain a alors acquis la presque totalité de ses propriétés mécaniques et le traitement conforme au procédé selon l'invention est adapté aux caractéristiques spécifiques de l'engrais aux performances souhaitées.

Dans le cas des engrais complexes du type N.P.K., le procédé selon l'invention est mis en oeuvre en fin de processus de production quand l'engrais a été séché et refroidi et que son humidité est comprise entre 0,1 et 3 % et, plus généralement, entre 0,2 et 1 %.

Les engrais ont des comportements très différents vis-à-vis du mottage.

Certains engrais ont tendance à motter vite et très fortement, d'autres mottent beaucoup plus lentement. Ces différences sont liées à un type d'engrais donné, mais on a observé que, pour un même type d'engrais, par exemple le nitrate d'ammonium dont le titre en azote varie entre 33,5 % et 34,8 %, le mottage peut dépendre des additifs utilisés pour la granulation ou le durcissement, du diluant mis dans la masse pour abaisser le titre de 34,8 à 33,5 %, mais aussi du procédé de fabrication, du mode et de la vitesse de refroidissement, et ainsi de suite. Par exemple, dans les engrais complexes comme les N.P.K., certaines formules sont très mottantes et d'autres non. Et pour une formule donnée, le mottage peut être lié, là encore, au procédé de fabrication, aux impuretés contenues dans les matières premières.

Le procédé selon l'invention peut être avantageusement adapté au type d'engrais à traiter et à la difficulté de l'antimottage, comme montré dans les exemples.

Les silicates mis en oeuvre conformément à l'invention sont des solutions aqueuses de silicates alcalins ou d'amines dont la teneur en matières sèches varie entre 15 et 60 %.

Les silicates alcalins sont les silicates de lithium, de sodium et de potassium, le silicate préféré étant le silicate de sodium.

Ils sont caractérisés par le rapport molaire

$SiO_2 / Na_2O = n,$

c'est-à-dire par le nombre de molécules de silice associées à une molécule d'oxyde de métal alcalin. Les solutions de silicates alcalins couramment disponibles dans le commerce ont des rapports qui varient entre 1 et 4. Si le rapport est proche de 1, le pH de la solution est sensiblement plus élevé que quand le rapport est proche de 4. De ce fait, quand le rapport est proche de 1, les silicates sont plus difficiles à manipuler, ce qui peut dans certains cas exclure leur emploi.

Les silicates d'amine peuvent être représentés par

$SiO_2 / (NR_4)_2O \cdot Na_2O$

où R représente des radicaux alkyle ou hydroxyalkyle, éventuellement substitués.

Précisant qu'elle n'entend pas être limitée par les explications qui suivent, la Société Demanderesse pense que, dans le cadre du procédé selon l'invention, l'action des silicates est liée à l'insolubilisation plus ou moins rapide de la silice à la surface des grains d'engrais. Dans ces conditions, la silice précipite soit sous forme d'hydrogel de silice, soit sous forme de silice très divisée. Cette précipitation à la surface même du grain assure une excellente adhérence du traitement sur l'engrais et une bonne homogénéité du traitement sur la totalité de chaque grain contrairement aux silicates ou enrobants inertes, insolubles dans l'eau, de l'art antérieur qui se fixent préférentiellement sur certaines parties du grain et qui, de plus, ont une très mauvaise adhérence et poussièrent dans le temps.

La silice précipitée assure une excellente protection du grain et une bonne isolation des grains entre eux et favorise l'écoulement des grains. De plus, elle est très hydrophobe et protège les grains contre l'humidité.

La rapidité de la précipitation de la silice à la surface de l'engrais dépend du type d'engrais à traiter.

Dans le cas des nitrates d'ammonium dont le titre varie entre 33,5 % et 34,8 %, le pH de surface des grains est en général inférieur à 7 et varie en général entre 4,5 et 6,5. Il est parfois inférieur si le nitrate n'est pas saturé en ammoniac avant la granulation ou le prilling. Quand on traite cet engrais avec un silicate conformément à l'invention, on observe un dégagement immédiat d'ammoniac, qui correspond à l'attaque du nitrate d'ammonium par le silicate de soude qui est un sel basique et qui provoque la précipitation immédiate de la silice. Le grain d'engrais ainsi traité a un aspect mat.

Dans le cas des autres engrais, le pH des grains est en général un peu supérieur et peut atteindre 7 à 7,5. Dans ce cas, la précipitation de la silice est moins rapide.

Pour certaines applications, un pH trop élevé lié à un rapport n proche de 1 peut être un inconvénient; c'est le cas, par exemple, pour le nitrate d'ammonium, l'emploi de telles solutions provoquant un départ d'ammoniac trop important. De plus, dans de telles solutions, la quantité de $SiO_2$ apportée par litre de produit antimottant appliqué est plus faible et cet inconvénient ne peut être compensé par l'emploi de solutions plus concentrées, leur solubilité étant insuffisante. En effet, la quantité de $SiO_2$ apportée par le traitement antimottant est importante.

Les silicates dont l'application selon l'invention est préférée sont ceux dont le rapport varie entre 2 et 4; le choix du silicate se fera selon que l'on traite séparément ou en mélange avec un tensio-actif ou sous forme d'une émulsion avec un tensio-actif et une huile ou un fuel et selon le type d'engrais à traiter.

Ainsi, par exemple, dans le cas du traitement d'un nitrate d'ammonium avec du silicate de sodium suivi d'un tensio-actif ou d'une huile (dans cet ordre ou dans l'ordre inverse), les silicates de rapport n = 2 ou n = 4 se sont révélés être pratiquement également efficaces.

Par contre, dans le cas d'un traitement avec une association tensio-actif silicate utilisés conjointement, c'est un silicate de rapport 2 qui semble être le meilleur compromis autant pour des problèmes de compatibilité de formule que pour des problèmes d'efficacité directe.

Dans le cas du traitement des engrais du type N.P.K., que ce soit par un silicate seul ou associé à un tensio-actif, tous les silicates dont le rapport est compris entre 2 et 4 conviennent selon les différents cas de figure.

Le silicate de potassium dans certaines applications s'est révélé légèrement moins bon notamment sur N.P.K. que le silicate de sodium.

Les silicates dont l'application selon l'invention est préférée, sont les silicates alcalins en solution aqueuse dont la teneur en matières sèches varie entre 15 et 60 % et, plus particulièrement, le silicate de sodium en solution concentrée, ceci afin d'apporter le moins d'eau possible sur l'engrais.

C'est surtout le cas dans le traitement du nitrate d'ammonium qui est couramment séché avant antimottage jusqu'à des humidités résiduelles comprises entre 0,1 et 0,4 % afin d'améliorer les propriétés mécaniques du grain.

Le procédé selon l'invention met alors en oeuvre, d'une façon générale, des doses telles qu'il ne soit pas apporté plus de 0,03 % à 0,1 % maximum d'humidité au grain afin de ne pas nuire aux propriétés mécaniques du grain.

Dans le cas des engrais du type N.P.K., l'humidité finale est de l'ordre de 0,2 à 1 % et parfois plus. Là encore, le traitement est calculé afin de ne pas accroître trop l'humidité du grain, ce qui aurait pour effet de nuire à ses propriétés mécaniques, mais l'influence de l'eau est moins préjudiciable que dans le cas des nitrates.

Le choix du silicate selon l'invention se fait donc en fonction du pH de ces derniers soit pour des problèmes de manipulation et de compatibilité avec l'engrais, soit, le cas échéant, pour des problèmes de formulation avec un tensio-actif. Il est aussi choisi de façon à précipiter rapidement au contact de l'engrais et de façon à apporter la quantité de silice précipitable nécessaire au traitement tout en n'apportant que le minimum d'eau compatible avec l'engrais.

Les silicates alcalins mis en oeuvre dans le cadre du procédé peuvent être selon l'invention des solutions concentrées du commerce dont l'extrait sec varie entre 35 et 60 % en fonction du rapport n elles peuvent être éventuellement diluées avec de l'eau mais de façon telle que la teneur en matières sèches ne soit pas inférieure à 15 % et que la masse spécifique de la solution ne soit pas inférieure à 1,1.

La Société Demanderesse ne désire pas être limitée par les explications qui suivent mais elle est d'avis que l'un des rôles du tensio-actif est de favoriser le contact entre le silicate et les grains d'engrais. En effet, le silicate n'a pas intrinsèquement un bon pouvoir filmogène. Ainsi, par exemple, quand il est pulvérisé sur une surface plane, le silicate se dépose sous forme de petites gouttelettes qui ne s'étalent pas et ne mouillent pas forcément l'ensemble de la surface. Dans ce cas, un tensio-actif en solution aqueuse soit pulvérisé avant la solution de silicate, soit incorporé à elle, soit pulvérisé après, permet de remédier à cet inconvénient.

Dans le même esprit, la Société Demanderesse pense qu'un autre rôle des tensio-actifs est d'apporter en association à l'effet antimottant du silicate un complément d'effet antimottant dû à un effet hydrophobant et à un rôle de modificateur de cristallisation.

Les tensio-actifs dont l'application est prévue dans le cadre du procédé selon l'invention sont des tensio-actifs anioniques.

Parmi les tensio-actifs anioniques, on peut citer:

- les acides gras en $C_{12}$ à $C_{20}$, dont notamment l'acide stéarique,
- les savons,
- les alkyl-aryl-sulfonates,
- les alcane-sulfonates,
- les sulfates d'alcools gras ou de phénols éventuellement oxyéthylénés,
- les phosphates d'alcools gras ou de phénols éventuellement oxyéthylénés,
- les sulfates d'alkanolamide,
- les sulfonates d'alkylalcanolamide,
- les alkyl-polypeptides, les alkyl-sarcosinates,
- les dérivés sulfatés des glycérides,
- les alkyl-sulfoacétates,
- les alkyl-sulfosuccinates,
- les alkylamido-sulfosuccinates.

Plus particulièrement, le tensio-actif est

- un tensio-actif alkylarylsulfonique sous forme de sel alcalin, alcalino-terreux ou d'alcoylamine, cycloalcoylamine, amine aromatique, l'amine ayant de 2 à 24 atomes de carbone,
- un polyalkylnaphtalène sulfonate d'alcalin, d'alcalino-terreux ou d'alcoylamine, de cycloalcoylamine, d'amine aromatique, l'amine ayant de 2 à 24 atomes de carbone,
- un mono-, di-, tri-, tétra-, propyl- ou isopropyl-, butyl- ou isobutyl-naphtalène, méthylnaphtalène sulfonate.

Ces tensio-actifs anioniques peuvent être utilisés dans l'eau (hydrosolubles) ou dans des solvants organiques (liposolubles).

Le choix des tensio-actifs appliqués dans le cadre du procédé conforme à l'invention dépend de nombreux facteurs tels que la nature de l'engrais à traiter, sa porosité, sa tendance naturelle à prendre en masse, sa dureté, le type d'installation industrielle utilisé, l'aspect du grain obtenu, le stockage et la destination de l'engrais et autres.

Ainsi, le nitrate d'ammonium est un produit stable s'il est très pur mais pouvant être dangereux s'il est acide et s'il contient de trop grandes quantités de produits organiques. Il se produit alors des réactions de décomposition qui peuvent conduire à l'explosion; par conséquent, on n'emploiera que des tensio-actifs particulièrement stables comme le sont par exemple les arylalkyl-sulfonates et les alcane-sulfonates.

L'un des avantages des compositions à base d'un silicate alcalin concentré et d'un tensio-actif est que la quantité de matière organique nécessaire à l'antimassage de l'engrais peut être réduite.

Un des autres avantages de l'invention lié à sa grande efficacité est que, pour certains engrais difficiles à antimasser comme certains nitrates d'ammonium, il était courant d'employer une huile contenant 15 à 30 % d'amine grasse comme la stéarylamine, et un enrobant minéral inerte comme un kieselguhr. Les engrais ainsi traités sont poussiéreux, la poussière étant à la fois due à un réenvolement de l'enrobant minéral et à la formation de poussière d'engrais. Les traitements selon l'invention, comme par exemple avec une solution de silicate alcalin et d'alkylnaphtalène sulfonate de sodium, sont nettement plus efficaces et ne provoquent aucun poussiérage de l'engrais.

Dans les autres types d'engrais où ce problème de danger n'existe pas, c'est l'expérience et en particulier l'efficacité recherchée qui président au choix du tensio-actif appliqué.

Dans certaines installations, on peut mettre en oeuvre un produit unique. La composition selon l'invention peut alors comprendre un silicate alcalin et un tensio-actif, ce dernier étant choisi en fonction de sa compatibilité avec le silicate. En effet, les silicates ne sont stables qu'en milieu légèrement basique. Aussi, le tensio-actif mis en oeuvre dans ce cas doit être stable à ces pH et être choisi tout particulièrement pour que le mélange final ne déphase ni ne relargue dans le temps, et puisse être appliqué en conservant son activité antimottante.

Dans certains cas, la composition antimottante comprend une huile, une cire ou un fuel; le tensio-actif est alors choisi de façon à donner une émulsion stable "silicate alcalin – huile ou fuel – tensio-actif", ne perdant pas ses propriétés au moment de l'utilisation.

Les huiles ou les cires que peuvent comprendre les compositions selon l'invention sont des cires ou des huiles minérales comme les huiles paraffiniques, naphténiques ou aromatiques, ou les huiles naturelles particulièrement stables, des pétrolatums ou vaselines, des paraffines; les huiles sont choisies pour leur pouvoir lubrifiant et leur pouvoir hydrophobant; elles doivent être non migrantes et si possible figer dès qu'elles sont au contact du grain.

Comme indiqué plus haut, la composition selon l'invention peut comporter un enrobant inerte, notamment quand il s'agit de traiter certains engrais particulièrement difficiles à antimotter, comme par exemple certains N.P.K.

Parmi ces enrobants, on peut citer le talc, la craie, le kaolin, le kieselguhr, les terres de diatomées, les argiles, les terres d'infusoires, les silico-aluminates naturels broyés ou précipités, et autres.

Lorsque la composition mise en oeuvre dans le cadre du procédé conforme à l'invention est liquide, elle est avantageusement pulvérisée sous forme de brouillard de très fines gouttelettes afin d'atteindre et d'enrober la totalité des grains d'engrais ou de sel.

Lorsqu'il s'agit de solutions aqueuses de silicates ou de tensio-actifs, ou d'un mélange des deux, ou encore d'émulsions obtenues par introduction de fuel ou d'une huile dans le mélange tensio-actif-silicates, on pulvérise à température ambiante ou après un léger réchauffement.

La pulvérisation peut être réalisée à l'aide de systèmes bien connus tels que des pulvérisateurs à buses du type airless ou à buses à air secondaire.

Dans le premier cas, la composition est pompée et envoyée sous une pression de 2 à 30 bars jusque dans les buses où elle éclate en microgouttelettes.

Dans le second cas, la composition est envoyée sous très faible pression jusque dans la buse et c'est un jet d'air sous pression qui provoque l'éclatement en gouttelettes.

Quand la composition selon l'invention comporte un tensio-actif en solution dans une cire, une paraffine, une vaseline, une huile ou un fuel, cette composition est avantageusement préchauffée jusqu'à des températures pouvant atteindre 80°C pour diminuer sa viscosité et envoyée sous des pressions pouvant atteindre 100 bars jusque dans des buses airless où elle est pulvérisée.

Dans tous les cas, les diamètres des buses et les pressions d'alimentation en liquide et/ou en air secondaire sont calculés de façon à assurer le bon dosage sur l'engrais du ou des produits appliqués.

Le nombre de buses de pulvérisation dépend de l'installation et du débit horaire d'engrais.

En général, 1 à 3 buses suffisent pour appliquer les compositions liquides mises en oeuvre dans le cadre du procédé selon l'invention.

Conformément au procédé selon l'invention, les compositions antimottantes sont appliquées sur l'engrais au stade final de sa fabrication.

Les doses de composition antimottante mises en oeuvre dans le cadre du procédé selon l'invention peuvent varier de 0,2 à 40 pour mille en poids par rapport au poids de l'engrais.

Ces doses varient en fonction des constituants de la composition antimottante et du type d'engrais à traiter. Elles tiennent compte de la nature de l'engrais, de sa composition et de son procédé de fabrication, de son aptitude particulière à motter et de ses propriétés physiques. Elles tiennent aussi compte des constituants de la composition appliquée sur l'engrais.

Lorsque, dans le cadre du procédé conforme à l'invention, on met en oeuvre un silicate alcalin et un tensio-actif, les doses respectives de silicate et de tensio-actif peuvent varier chacune de 0,02 à 7,2 pour mille mais de façon telle que la dose globale qui est la somme des deux doses particulières soit de 0,2 à 8 pour mille en poids par rapport à l'engrais; plus préférentiellement encore, la dose en question varie de 0,5 à 3 pour mille en poids par rapport à l'engrais.

Lorsque, dans le cadre du procédé conforme à l'invention, on met en oeuvre une composition à base d'un tensio-actif et d'un silicate alcalin ou d'amine, la dose appliquée sur l'engrais varie de 0,2 à 8 pour mille en poids par rapport à l'engrais, le rapport des matières sèches silicate alcalin sur tensio-actif dans la composition selon l'invention variant de 1/9 à 9, ce qui signifie que les proportions respectives de silicate alcalin et de tensio-actif varient de 10/90 à 90/10 (exprimées en sec/sec). Toujours dans ce cas, les doses préférées varient de 0,5 à 3 pour mille en poids par rapport à l'engrais, plus préférentiellement de 0,6 à 1,6 pour mille en poids.

Lorsque, dans le cadre du procédé conforme à l'invention, on applique également un fuel, une huile, une vaseline, une paraffine ou une cire, la dose de ce dernier produit peut varier entre 0,2 et 5 pour mille en poids par rapport à l'engrais, les doses préférées étant comprises entre 0,6 et 2 pour mille.

Enfin, lorsque, dans le cadre du procédé conforme à l'invention, on applique également un enrobant minéral inerte, on ajoute aux doses décrites précédemment des doses d'enrobant pouvant varier entre 1 et 35 pour mille en poids par rapport à l'engrais, les doses préférées d'enrobant variant dans la pratique de 2 à 8 pour mille.

Pour mettre en évidence l'efficacité du procédé d'antimottage et de la composition antimottante selon l'invention, la Société Demanderesse a effectué différents tests et mesures.

Parmi ces mesures ou tests, on cite tout d'abord le test dit de la "boîte à motter". Ce test permet dans un temps très court de comparer entre eux et par rapport à un témoin le comportement d'engrais traités par différents produits; il permet d'obtenir une réponse rapide, mais par contre il n'est pas réellement représentatif du comportement d'un engrais au stockage.

Dans le cadre de ce test, l'engrais est placé sous pression dans une enceinte climatique dont on fait varier de façon cyclique la température et l'humidité ambiantes. Pratiquement, l'engrais est placé dans un cylindre perforé et soumis à une pression constante par l'intermédiaire d'un piston coulissant librement dans le cylindre contenant l'engrais; le piston est chargé, avec un poids donné de façon que la pression exercée soit de l'ordre de 0,8 kg/cm$^2$. Plusieurs cylindres de ce type sont placés dans une enceinte climatique où l'on fait varier l'humidité relative en même temps que la température. Par exemple, on peut faire varier l'humidité relative entre 80 % et 40 %, les températures variant simultanément entre 31°C et 24°C. De tels cycles peuvent être réalisés par exemple toutes les douze heures.

Après 2 ou 3 jours, on reprend l'éprouvette d'engrais et observe son état. Si les grains d'engrais ne sont absolument pas liés entre eux, l'engrais s'écoule; cette propriété est désignée dans la technique par le terme anglais "free-flowing" qui peut se traduire par "s'écoulant librement". Si les grains sont légèrement liés entre eux, l'engrais a conservé la forme du cylindre dans lequel a été effectué le test mais la cohésion entre les grains peut être suffisamment faible pour que le cylindre s'écrase dès qu'on le manipule.

Par contre, si les grains sont fortement liés entre eux, l'engrais se présente sous forme d'un cylindre dur et le degré de mottage est apprécié par la force nécessaire pour écraser ce cylindre par exemple entre les plateaux d'un dynamomètre.

On considère que le procédé d'antimottage est efficace s'il donne un engrais "free-flowing" ou des cylindres friables. Dans les autres cas, le traitement est d'autant meilleur que les forces nécessaires pour écraser le cylindre sont faibles. Pour avoir une réponse fiable, on réalise une dizaine d'éprouvettes pour chaque composition à plusieurs reprises dans plusieurs boîtes. Les résultats sont exprimés par le rapport entre la force nécessaire pour écraser un engrais traité et celle nécessaire pour écraser le témoin.

Plutôt que d'avoir recours au test de la boîte à motter, on préfère mesurer l'efficacité antimottante de différentes compositions en conditionnant les engrais traités dans des sacs et en soumettant ces sacs à des pressions importantes pendant des délais assez longs et pouvant atteindre plusieurs mois.

Il est avantageux, par exemple, de disposer ces sacs par quatre sur des palettes et de charger ces palettes de façon à réaliser des pressions pouvant atteindre 0,3 à 5 kg/cm$^2$.

Ensuite, l'engrais est repris et l'on observe son comportement. Si l'engrais n'a pas motté, les grains sont parfaitement libres entre eux et le contenu du sac s'écoule facilement sans que l'on observe de petites mottes. En cas de mottage partiel, on observe des blocs dans les sacs et la tendance au mottage est appréciée d'abord en pesant les mottes et en ramenant leur poids au poids d'engrais du sac et aussi en appréciant la dureté de ces mottes, c'est-à-dire en mesurant la force nécessaire pour les briser. En cas de mottage total, l'engrais contenu dans le sac se présente sous forme d'un bloc et il convient alors de mesurer la force nécessaire pour réduire ce bloc.

On considère qu'un procédé d'antimottage donne des résultats d'autant meilleurs que l'on observe le moins de mottes pour des stockages les plus longs sous des pressions les plus élevées et que, s'il y a des mottes, celles-ci sont le plus friable possible.

Le procédé d'antimottage ne doit pas fragiliser les grains d'engrais ni diminuer leur dureté. Pour cela, il convient de comparer la dureté des grains traités et des grains non traités à l'aide d'un duromètre qui mesure la force d'écrasement du grain entre deux tiges. Il est aussi intéressant de mesurer la dureté des grains après mottage. En effet, après un mottage important, la cohésion des grains diminue, ce qui permet aussi de classer les traitements antimottants entre eux.

Il est quelquefois inévitable que des engrais soient stockés dans des conditions climatiques difficiles. C'est le cas, par exemple, des pays chauds et humides ou encore des stockages en vrac dans des hangars non clos. Il faut alors que le procédé d'antimottage soit hydrophobant pour protéger l'engrais des variations d'humidité ambiante. Il sera alors intéressant, pour comparer les traitements antimottants, de mesurer la reprise d'humidité de l'engrais traité dans des atmosphères d'humidité relative variables.

Souvent, à la reprise des engrais au silo, on observe un réenvolement ou formation de poussière soit de l'enrobant utilisé à l'extérieur du grain, soit de "particules fines d'engrais", c'est-à-dire de grains d'engrais qui se sont délités ou effrités à cause du mottage. Il est important d'évaluer l'influence du procédé d'antimottage sur ce phénomène de poussiérage. Pour cela, on fait subir à l'engrais une ou plusieurs chutes d'une hauteur de 1 m à l'intérieur d'un cylindre fermé dans un courant d'air qui entraîne l'enrobant mal fixé ou les particules fines d'engrais qui sont recueillies en filtrant l'air sur une membrane; ces produits entraînés sont ensuite pesés.

Le résultat est d'autant meilleur que la quantité de poussière réenvolée est plus faible. Cette quantité est plus facilement exprimée par rapport à de l'engrais non traité. Il est aussi important d'analyser cette poussière pour distinguer la partie due à l'enrobant et la partie due à l'engrais.

Les exemples suivants sont destinés à mieux faire comprendre la portée de l'invention, à montrer ses avantages par rapport à l'art antérieur, mais ne sont pas limitatifs de cette dernière.

Dans ces exemples qui sont relatifs à des modes de réalisation avantageux, on a recours à différents tensio-actifs anioniques dont on décrit dans ce qui suit le mode de fabrication.

Une classe de tensio-actifs avantageusement utilisés selon l'invention est celle des alkylaryl-sulfonates d'alcalins, d'alcalino-terreux ou d'amine plus particulièrement celle des polyalkylnaphtalène sulfonate d'alcalins, d'alcalino-terreux ou d'amine.

Leur fabrication est bien connue.

On peut par exemple faire réagir différentes quantités d'alcool comme le propanol, l'isopropanol, le butanol, l'isobutanol, l'alcool acrylique, isoacrylique, etc. sur du naphtalène ou des coupes naphtaléniques à base de méthylnaphtalène ou diméthylnaphtalène en présence d'acide sulfurique à 98 % et/ou d'oléum à 20 % pour obtenir le dérivé alkylé et sulfoné souhaité. L'excès d'acide dilué obtenu en fin de réaction est éliminé par décantation et l'acide polyalkylnaphtalène sulfonique obtenu est neutralisé par un alcalin, un alcalino-terreux, une amine, le sulfate excédentaire étant éventuellement éliminé par filtration ou précipitation au froid.

Un produit avantageusement utilisé selon l'invention est celui obtenu par exemple à partir de 2 moles d'alcool comme l'isopropanol ou l'isobutanol sur du naphtalène ou une coupe riche en méthylnaphtalène. Ce produit est avantageusement sulfoné avec un excès d'oléum à 20 % de façon à ce que tous les noyaux soient alkylés et soient au moins monosulfonés. L'excès d'acide nécessaire est de l'ordre de 3 fois la stoechiométrie par rapport au nombre de noyaux aromatiques utilisés.

Ce produit peut être neutralisé avec un alcalin comme par exemple la soude ou la potasse, une amine courte comme la monoéthanolamine quand on souhaite obtenir un produit soluble dans l'eau.

Ce produit peut être associé avec des sels solubles d'acide β-naphtalènesulfonique polymérisés au formol.

Nous appellerons par la suite "solution A" un tel produit sous forme de sel de sodium contenant 20 % exprimé en matière sèche sur matière sèche de polymère de β-naphtalène sulfonate de sodium polymérisé au formol, le tout en solution aqueuse à 45 % de matière sèche.

Nous appellerons "solution B" le même produit mais neutralisé avec de la monoéthanolamine en solution aqueuse à 70 % de matière sèche.

Il peut être parfois avantageux d'utiliser de tels produits en solution huileuse pour renforcer le pouvoir hydrophobe du traitement.

Nous appellerons "solution C" le produit comme décrit plus haut, obtenu avec 2 moles d'alcool, neutralisé avec une amine grasse comme la stéarylamine, dans une huile.

Sa composition est la suivante:

| | |
|---|---|
| acide alkylnaphtalène sulfonique | = 11,5 |
| coupe d'alkylamine majoritairement $C_{18}$ | = 15,0 |
| acide stéarique | = 18,5 |
| huile (par exemple SW 50 de B.P.) | = 55 |

Dans ce genre de composition, on peut avantageusement remplacer l'acide stéarique par des cires paraffiniques de polyéthylène, etc.

Nous appellerons "solution D" le produit obtenu comme décrit plus haut mais avec 4 moles d'isobutanol ou de butanol réagies sur du naphtalène ou du méthylnaphtalène et neutralisé avec une amine grasse comme la stéarylamine en solution dans une huile (par exemple SW 50 de B.P.).

**Exemple 1**

On prépare une composition antimottante appelée composition n° 1 et dont la constitution est la suivante:

| | |
|---|---|
| Solution A précédemment décrite | 43,8 |
| Eau | 9,6 |
| Solution de soude à 30 % | 4,0 |
| Silicate de soude d'extrait sec 46,4 % et de rapport $SiO_2$ / $Na_2O$ = 2,1 | 42,6 |
| | 100,0 |

La composition n° 1 présente un extrait sec de 40 %.

Dans une bétonnière, on effectue une pulvérisation à une température de 30°C, de 24 g de la composition n° 1 sur un échantillon de 20 kg de nitrate d'ammonium prillé dont la teneur en azote est de 33,5 % et dont la température est de 30°C.

On prépare un échantillon-témoin illustrant l'art antérieur en traitant 20 kg de nitrate d'ammonium avec 20 g d'une solution de stéarylamine à 30 % dans l'huile par pulvérisation à une température de 80 – 85°C.

Les deux échantillons d'engrais ainsi traités ainsi qu'un échantillon de 20 kg non traité sont testés par des essais en empilage réel. Après un mois de stockage sous trois tonnes de charge, on évalue le mottage en pesant les mottes observées dans chaque sac et en évaluant leur friabilité.

L'échantillon non traité présente une prise en masse totale correspondant à un taux de mottage de 100 % et les mottes sont particulièrement dures.

Le taux de mottage de l'échantillon illustrant l'art antérieur est de 15 %, mesuré relativement au nitrate d'ammonium non traité.

L'échantillon traité avec la composition n° 1 conduit à un taux de mottage de 2 %, qui est insignifiant et on n'observe aucune poussière d'engrais.

Les résultats sont reportés dans le tableau I.

**Exemple 2**

Dans une bétonnière, on pulvérise à une température de 30°C, 24 g de la composition n° 1 sur un échantillon de 20 kg de nitrate d'ammonium dont le titre en azote est de 26 % et la température de 28°C.

On prépare un échantillon-témoin illustrant l'art antérieur en pulvérisant 20 g d'une solution d amine grasse dans l'huile à 25 % sur 20 kg de nitrate d'ammonium. La pulvérisation est réalisée à une température de 80°C.

On prépare un autre échantillon-témoin en pulvérisant 8 g de tensio-actif à base de tétraalkylnaphtalène sulfonate de monoéthanolamine dans une cire dans le rapport 33/66 sur 20 kg de nitrate d'ammonium. Cette dernière pulvérisation est effectuée à une température de 95°C.

Les trois échantillons d'engrais ainsi traités sont testés par des essais en empilage réel, comme décrit plus haut.

Le taux de mottage du nitrate d'ammonium traité avec la solution d'amine est de 15 % mesuré relativement à un témoin de nitrate d'ammonium non traité dont le taux de mottage est de 100 %, ce qui correspond à une prise en masse totale.

L'échantillon témoin traité avec le tétraalkylnaphtalène sulfonate de monoéthanolamine conduit à un taux de mottage de 14 %.

La composition n° 1 conduit à un taux de mottage de 3 %, les mottes étant de plus très friables.

**Exemple 3**

On pulvérise dans une bétonnière, à une température de 30°C, sur un échantillon de 20 kg d'engrais N.P.K. 15/11/22, 24 g du produit antimottant de la composition n° 1.

La pulvérisation est suivie d'un enrobage à l'aide de 100 g d'une argile commerciale. On laisse tourner la bétonnière pendant 5 minutes afin que les granulés d'engrais N.P.K. soient uniformément enrobés.

L'enrobage est suivi par une pulvérisation de 32 g de fuel lourd.

On prépare un échantillon-témoin en enrobant de la même façon 20 kg d'engrais N.P.K. à l'aide de 100 g d'argile commerciale, puis on pulvérise un mélange de 8 g de tensio-actif à base de tétraalkylnaphtalène sulfonate de monoéthanolamine dans une huile aromatique dans le rapport 70/30 et de 32 g de fuel lourd.

Après un test d'empilage réel de 15 jours, le taux de mottage de l'engrais traité avec la composition n° 1 est de 1,2 % alors que celui traité avec le tétraalkylnaphtalène sulfonate de monoéthanolamine dans une huile est de 32 % relativement à un échantillon-témoin non traité dont la prise en masse est totale, ce qui correspond à un taux de mottage de 100 %.

Les résultats sont reportés dans le tableau I.

**Exemple 4**

On prépare une composition antimottante appelée composition n° 2 en mélangeant les constituants suivants:

| | |
|---|---|
| Solution B | 26,7 |
| Eau | 23,7 |
| Solution de soude à 30 % | 9,3 |
| Silicate de soude d'extrait sec 46,4 % et de rapport $SiO_2$ / $Na_2O$ = 2,1 | 42,6 |
| | 100,0 |

cette composition antimottante ayant un extrait sec de 40 %.

On pulvérise dans une bétonnière 24 g de la composition n° 2 sur 20 kg de nitrate d'ammonium dont le titre en azote est de 33,5 % et dont la température est de 31°C.

On soumet cet échantillon au test d'empilage décrit à l'exemple 1. Le taux de mottage du nitrate d'ammonium traité par la composition n° 2 est de 13 % relativement à un témoin non traité dont la prise en masse est totale, ce qui correspond à un taux de mottage de 100 %.

Les résultats sont reportés dans le tableau I.

**Exemples 5 et 6**

On prépare une composition antimottante appelée composition n° 3 en mélangeant les constituants suivants:

| | |
|---|---|
| Solution A | 56,9 |
| Eau | 10,4 |
| Solution de soude à 30 % | 5,1 |
| Silicate de soude d'extrait sec 46,4 % et de rapport $SiO_2$ / $Na_2O$ = 2,1 | 27,6 |
| | 100,0 |

cette composition antimottante ayant un extrait sec de 40 %.

Le rapport en matières sèches:

$$\frac{\text{sulfonate de sodium}}{\text{silicate de soude}}$$

est de 2.

De la même façon, on prépare une composition antimottante appelée composition n° 4 en mélangeant les constituants suivants:

| | |
|---|---|
| Solution A | 28,1 |
| Eau | 14,8 |
| Solution de soude à 30 % | 2,5 |
| Silicate de soude d'extrait sec 46,4 % et de rapport $SiO_2$ / $Na_2O$ = 2,1 | 54,6 |
| | 100,0 |

Cette composition a un extrait sec de 38,7 %.

Le rapport en matières sèches:

$$\frac{\text{sulfonate de sodium}}{\text{silicate de soude}}$$

est de 0,5.

De la même manière que dans l'exemple 1, on teste sur un nitrate d'ammonium dont le titre en azote est de 33,5 % les compositions n° 3 et 4.

Les résultats sont reportés dans le tableau I.

**Exemple 7**

On procède de la même façon qu'à l'exemple 3, à la différence près qu'il n'y a pas de pulvérisation de fuel lourd et, par ailleurs, que les traitements respectivement à l'argile et à la composition n° 1 sont faits dans l'ordre inverse.

Il y a également une différence sur le plan des quantités mises en oeuvre.
Les résultats sont reportés dans le tableau I.

**Exemple 8**

On procède de la même façon qu'à l'exemple 3, à la différence près que l'argile est remplacée par du talc.
Les résultats sont reportés dans le tableau I.

**Exemple 9**

Dans une bétonnière, on pulvérise à une température de 20°C, 20 g d'une solution de silicate de soude de rapport $SiO_2/Na_2O$ = 3,5 et d'extrait sec égal à 35 %, sur un échantillon de nitrate d'ammonium dont le titre en azote est de 33,5 %.

Cette première pulvérisation est suivie d'une seconde réalisée à 70°C, de 12 g de tensio-actif à base de dialkylnaphtalène sulfonate de monoéthanolamine avec une cire dans le rapport 66/33.

On prépare un échantillon-témoin en pulvérisant à une température de 80°C, 20 g d'une solution commerciale d'huile aminée à 25 % sur 20 kg du même nitrate d'ammonium.

Les deux échantillons d'engrais ainsi traités sont testés par des essais en empilage réel.

Le taux de mottage de l'échantillon traité à l'aide de la solution de silicate de soude et du dialkylnaphtalène sulfonate de monoéthanolamine est de 6 % et celui du nitrate d'ammonium traité avec l'huile aminée de 9 %, relativement à un témoin de nitrate d'ammonium non traité dont le taux de mottage est de 100 %, ce qui correspond à une prise en masse totale.

Les résultats sont reportés dans le tableau I.

**Exemple 10**

Dans une bétonnière, on pulvérise, à une température de 20°C, 20 g d'une solution de silicate de soude de rapport $SiO_2/Na_2O$ = 3,5 et d'extrait sec égal à 35 %, sur 20 kg d'un nitrate d'ammonium dont le titre en azote est de 33,5 %.

Cette pulvérisation est suivie d'une autre de 8 g d'acide stéarique, à une température de 70°C sur un engrais dont la température est de 30°C.

Le nitrate ainsi traité est testé par des essais en empilage réel comme décrit précédemment.

Le taux de mottage de l'engrais ainsi traité est de 33 % mesuré relativement à un témoin de nitrate d'ammonium non traité dont le taux de mottage est de 100 %.

Les résultats sont reportés dans le tableau I.

**Exemple 11**

On prépare la solution suivante:

On mélange 40 g d'une solution aqueuse à 30 % d'un sulfate d'alcool en $C_{12}$ – $C_{14}$ oxyéthyléné à 3 moles d'oxyde d'éthylène avec 40 g d'une solution de silicate de soude dont le rapport $SiO_2/Na_2O$ = 2,1 et d'extrait sec égal à 46,4 %; on ajoute ensuite 20 g d'eau de façon à obtenir une solution homogène d'extrait sec égal à 30 %.

On pulvérise sur 20 kg d'un nitrate d'ammonium dont le titre en azote est de 33,5 % et la température de 30°C, 24 g de la solution précédemment décrite.

L'engrais ainsi traité est testé par des essais en empilage réel comme décrit précédemment.

Le taux de mottage de l'engrais ainsi traité est de 6 % mesuré relativement à un témoin de nitrate d'ammonium non traité dont le taux de mottage est de 100 %.

Les résultats sont reportés dans le tableau I.

**Exemple 12**

On prépare la composition antimottante suivante appelée composition n° 5.

| | |
|---|---|
| Solution B précédemment décrite | 33,3 |
| Solution soude à 30 % | 16,7 |
| Eau | 16,7 |
| Silicate de potasse d'extrait sec 31,5 % et de rapport $SiO_2/K_2O$ = 2,32 | 33,3 |
| | 100,0 |

Cette composition antimottante a un extrait sec de 39 %.

Dans une bétonnière, on pulvérise 26 g de la composition n° 5 à une température de 20°C sur 20 kg d'un nitrate d'ammonium dont le titre en azote est de 33,5 % et dont la température atteint 31°C.

L'engrais ainsi traité est testé par des essais en empilage réel comme décrit précédemment.

Le taux de mottage du nitrate d'ammonium ainsi traité est de 5 % mesuré relativement à un témoin non traité dont le taux de mottage est de 100 %, ce qui correspond à une prise en masse totale.

Les résultats sont reportés dans le tableau I.

**Exemple 13**

On a décrit la préparation du sel de monoéthanolamine de l'acide naphtalène-sulfonique polycondensé au formol.

On prépare une solution à 70 % d'extrait sec.

On prépare la composition antimottante suivante appelée composition n° 6:

| | |
|---|---|
| Sel de monoéthanolamine de l'acide β-naphtalène sulfonique polycondensé au formol à 70 % | 22,7 |
| Eau | 22,7 |
| Solution de soude à 30 % | 9,1 |
| Silicate de soude de rapport $SiO_2/Na_2O$ = 2,1 et d'extrait sec égal à 35 % | 45,5 |
| | 100,0 |

Cette composition a un extrait sec de 35 %.

On pulvérise dans une bétonnière, 24 g de la composition n° 6 à une température de 20°C sur 20 kg d'un nitrate d'ammonium dont le titre en azote est de 33,5 % et la température de 30°C.

L'engrais ainsi traité est testé par des essais en empilage réel comme décrit précédemment.

Le taux de mottage du nitrate d'ammonium ainsi traité est de 24 % mesuré relativement à un témoin d'engrais non traité dont le taux de mottage atteint 100 %, ce qui correspond à une prise en masse totale.

Les résultats sont reportés dans le tableau I.

**Exemple 14**

On prépare une composition antimottante appelée composition n° 7 et dont la constitution est la suivante:

| | |
|---|---|
| Solution A précédemment décrite | 34,5 |
| Eau | 11,2 |
| Solution de soude à 30 % | 4,1 |
| Silicate de soude d'extrait sec 46,4 % et de rapport $SiO_2$ / $Na_2O$ = 2,1 | 50,2 |
| | 100,0 |

La composition n° 7 présente un extrait sec de 40 %.

Dans une bétonnière, on effectue une pulvérisation à une température de 30°C, de 16 g de la composition n 7 sur un échantillon de 20 kg de nitrate d'ammonium prillé dont la teneur en azote est de 33,5 % et dont la température est de 30°C.

On prépare un échantillon-témoin illustrant l'art antérieur en traitant 20 kg de nitrate d'ammonium avec 20 g d'une solution de stéarylamine à 20 % dans l'huile par pulvérisation à une température de 80 – 85°C.

Les deux échantillons d'engrais ainsi traités ainsi qu'un échantillon de 20 kg non traité sont testés par des essais en empilage réel. Après un mois de stockage sous trois tonnes de charge, on évalue le mottage en pesant les mottes observées dans chaque sac et en évaluant leur friabilité.

L'échantillon non traité présente une prise en masse totale correspondant à un taux de mottage de 100 % et les mottes sont particulièrement dures.

Le taux de mottage de l'échantillon illustrant l'art antérieur est de 40 %, mesuré relativement au nitrate d'ammonium non traité.

L'échantillon traité avec la composition n° 7 conduit à un taux de mottage de 28 %, qui est insignifiant et on n'observe aucune poussière d'engrais.

Les résultats sont reportés dans le tableau I.

**Exemple 15**

Dans une bétonnière, on pulvérise à une température de 30°C, sur un échantillon de 20 kg d'engrais granulé N.P.K. de formule 15-12-24, 24 g de la composition n° 7.

La pulvérisation est suivie d'un enrobage à l'aide de 100 g d'une argile commerciale. La rotation de la bétonnière pendant 5 minutes permet l'uniformité de l'enrobage des granulés N.P.K. Cet enrobage est suivi par une pulvérisation de 32 g de fuel lourd.

On prépare un échantillon témoin en enrobant 20 kg d'engrais N.P.K. selon le même procédé avec 100 g d'argile commerciale, puis on pulvérise un mélange de 8 g de tensio-actif à base de tétraalkylnaphtalène sulfonate de monoéthanolamine dans une huile aromatique dans le rapport 70/30 et de 32 g de fuel lourd.

Après un test d'empilage réel de 45 jours, le taux de mottage de l'engrais traité avec la composition n° 7 est de 2 % avec des mottes très friables, alors que celui traité avec le tétraalkylnaphtalène sulfonate de monoéthanolamine est de 10 % relativement à un échantillon témoin non traité dont la prise en masse est totale, ce qui correspond à un taux de mottage de 100 %.

Les résultats sont reportés dans le tableau I.

**Exemple 16**

On prépare une composition antimottante appelée composition n° 8 et dont la constitution est la suivante:

| | |
|---|---|
| Solution A précédemment décrite | 69,0 |
| Eau | 10,2 |
| Solution de soude à 30 % | 4,1 |
| Silicate de soude d'extrait sec 46,4 % et de rapport $SiO_2$ / $Na_2O$ = 2,1 | 16,7 |
| | 100,0 |

Cette composition a un extrait sec de 40 %.

On pulvérise dans une bétonnière à température ambiante sur 20 kg de nitrate d'ammonium prillé dont le titre en azote est de 33,5 %, 26 g de la composition n° 8.

On prépare un échantillon-témoin en enrobant 20 kg de cet engrais avec 8 g de tensio-actif à base de tétraalkylnaphtalène sulfonate de monoéthanolamine dans une cire dans le rapport 33/66 maintenu à la température de 80 – 85°C pendant la pulvérisation.

On soumet cet échantillon au test d'empilage décrit dans l'exemple 1. Le taux de mottage du nitrate d'ammonium traité par la composition n° 8 est de 34 % relativement à un témoin non traité dont le taux de mottage est de 100 %, ce qui correspond à une prise en masse totale.

L'échantillon témoin donne un taux de mottage de 100 %.

Les résultats sont reportés dans le tableau I.

**Exemple 17**

On prépare une composition antimottante appelée composition n° 9 et dont la constitution est la suivante:

| | |
|---|---|
| Solution A précédemment décrite | 51,7 |
| Eau | 5,0 |
| Solution de soude à 30 % | 4,1 |
| Silicate de soude d'extrait sec 39,6 % et de rapport $SiO_2$ / $Na_2O$ = 2,1 | 39,2 |
| | 100,0 |

Cette composition a un extrait sec de 40 %.

On pulvérise dans une bétonnière sur 20 kg de nitrate d'ammonium prillé, dont le titre en azote est de 33,5 % et la température de 38°C, 30 g de la composition n° 9.

On prépare un échantillon-témoin illustrant l'art antérieur en pulvérisant 24 g d'une solution d'amine grasse à 20 % dans l'huile. La pulvérisation est réalisée à une température de 80°C. Elle est suivie par un enrobage avec 500 g de kieselghur. La rotation de la bétonnière est prolongée pendant 5 minutes pour assurer l'homogénéité du traitement.

Après le test d'empilage semblable à celui décrit dans l'exemple 1, l'engrais traité avec la composition n° 9 a un taux de mottage de 45 %, avec des mottes très friables, comparativement à un témoin non traité dont le taux de mottage est de 100 %.

Le taux de mottage de l'engrais traité avec l'huile aminée est de 100 %. De plus, il est extrêmement poussiéreux.

Les résultats sont reportés dans le tableau I.

**Exemple 18**

Dans une bétonnière on pulvérise sur 20 kg de nitrate d'ammonium granulé, dont le titre en azote est de 26 % et la température de 40°C, 28 g de la composition n° 9 à la température ambiante.

On prépare un échantillon-témoin en enrobant de la même façon 20 kg de cet engrais avec 24 g de solution aqueuse réglée à 35 % d'extrait sec d'un mélange de tensio-actif à base de dialkylnaphtalène sulfonate de monoéthanolamine. Cette pulvérisation est précédée par un enrobage à l'aide de 100 g de talc commercial.

Après un test d'empilage réel de 1 mois, l'engrais traité avec la composition n° 9 présente un taux de mottage de 70 %, avec des mottes friables, mesuré relativement à un engrais non traité dont le taux de mottage est de 100 %, avec des mottes dures correspondant à une prise en masse totale.

Dans ces conditions, l'échantillon-témoin donne un taux de mottage de 100 % et est légèrement poussiéreux.

Les résultats sont reportés dans le tableau I.

**Exemple 19**

On procède de la même façon que dans l'exemple 15, à la différence près que la formule de l'engrais est 17 x 17 x 17 et que la composition n° 9 remplace la composition n° 7.

Après un test d'empilage réel de 84 jours, le taux de mottage de l'engrais traité avec la composition n° 9 est de 6,5 % avec des mottes friables, celui traité avec le tétraalkylnaphtalène sulfonate de monoéthanolamine est de 28 % comparativement à un échantillon-témoin non traité dont le taux de mottage est de 100 %, ce qui correspond à une prise en masse totale.

**Exemple 20**

On prépare une composition antimottante appelée composition n° 10 et dont la constitution est la suivante:

| | |
|---|---|
| Solution A précédemment décrite | 42,0 |
| Solution de soude à 30 % | 4,0 |
| Silicate de soude d'extrait sec 35 % et de rapport $SiO_2 / Na_2O = 3,5$ | 54,0 |
| | 100,0 |

cette composition ayant un extrait sec de 39 %.

On pulvérise dans une bétonnière sur 20 kg de nitrate basse densité de teneur en azote de 33,5 %, 40 g de la composition n° 10 à la température ambiante.

On prépare un échantillon-témoin illustrant l'art antérieur en pulvérisant à 80°C 14 g de cire microcristalline de point de fusion 65 – 70°C, suivi d'une pulvérisation de 14 g d'une amine grasse à la température de 80°C.

Après un empilage, tel qu'il est décrit dans l'exemple 14, l'engrais traité avec la composition n° 10 présente un taux de mottage de 50 % avec des mottes friables, par rapport à l'échantillon de l'engrais non traité qui donne un taux de mottage de 100 %, correspondant à une prise en masse totale.

L'engrais traité avec l'association cire-amine grasse présente un taux de mottage de 95 % avec des mottes très dures.

Les résultats sont reportés dans le tableau I.

**Exemple 21**

On prépare une composition antimottante appelée composition n° 11 constituée de la façon suivante:

| | |
|---|---|
| Solution A précédemment décrite | 36,5 |
| Eau | 27,8 |
| Solution de soude à 30 % | 7,1 |
| Métasilate de soude pentahydraté contenant 42,5 % d'eau et de rapport $SiO_2 / Na_2O = 1$ | 28,6 |
| | 100,0 |

On procède comme dans l'exemple 14, à la différence près que les 16 g de la composition n° 7 sont remplacés par 20 g de la composition n° 11.

L'échantillon non traité présente une prise en masse totale correspondant à un taux de mottage de 100 % et les mottes sont particulièrement dures.

Le taux de mottage de l'échantillon illustrant l'art antérieur est de 40 %, mesuré relativement au niveau d'ammonium non traité.

L'échantillon traité avec la composition n° 7 conduit à un taux de mottage de 20 %, les mottes étant friables.

**Exemple 22**

Dans une bétonnière, on charge 20 kg de N.P.K. 3 x 17 granulé à une température de 40°C et sous agitation et on pulvérise 16 g d'une solution de silicate de soude dont le rapport $SiO_2$ sur $Na_2O$ est de 2,1 et dont l'extrait sec a été ramené à 40 %.

On saupoudre ensuite, toujours sous agitation, 60 g d'argile et on pulvérise immédiatement 40 g de solution C portée à 80°C. On laisse tourner la bétonnière 5 minutes supplémentaires puis on ensache l'engrais et on met en pile avec un sac d'engrais non traité sous 2 tonnes de charge. Après 2 mois sous pression, la pile est défaite et les sacs sont ouverts.

L'engrais traité comme décrit plus haut présente juste une petite motte friable représentant 15 % du poids dé l'engrais.

L'engrais non traité est sous forme d'une motte dure. Le mottage est de 100 %.

**Exemple 23**

Dans une bétonnière, on charge 20 kg de nitrate d'ammonium dont le titre a été ramené à 33,5 % par 4 % de sulfate d'ammonium. L'engrais étant à 35°C et agité, on pulvérise 20 g d'une solution de silicate de soude de rapport $SiO_2/Na_2O$ = 3,5. Toujours sous agitation, on pulvérise 20 g de solution C portée à 80°C. On laisse tourner la bétonnière pendant 5 minutes supplémentaires et on ensache l'engrais.

On réalise un traitement témoin de l'art antérieur en pulvérisant de la même façon 40 g d'huile contenant 20 % de stéarylamine préalablement portée à 80°C.

L'engrais selon l'invention, l'engrais selon le traitement témoin et l'engrais non traité sont ensachés, les sacs empilés sous une charge de 3 tonnes.

Après un empilage de 2 mois, le sac d'engrais non traité est un bloc dur qui ne casse pas après plusieurs chutes, l'engrais traité avec l'amine dans l'huile présente une motte assez dure représentant 60 % de l'engrais présent, et l'engrais traité selon l'invention ne présente qu'une motte de 15 % assez friable.

**Exemple 24**

On procède comme dans l'exemple 22 mais la solution C est remplacée par la solution D.

L'échantillon-témoin de l'art antérieur est réalisé en saupoudrant sur les 20 kg de N.P.K. 3 x 17 140 g d'une argile dopée à 3 % de stéarylamine et en pulvérisant 40 g de fuel lourd n° 2 préalablement chauffé à 80°C.

Après dépilage, l'engrais selon l'invention n'est pas motté et s'écoule librement après l'ouverture des sacs, l'engrais traité selon l'art antérieur est motté à plus de 40 % alors que l'engrais non traité est un véritable bloc dur.

Les résultats sont reportés dans le tableau I.

**Tableau**

| Ex. Type d'engrais | Traitement | dose g/t | taux de mottage % | Echantillon-témoin | dose g/t | taux de mottage % | taux de mottage du témoin d'engrais non traité |
|---|---|---|---|---|---|---|---|
| 1 nitrate d'ammonium titre 33,5 % | Composition n° 1 | 1200 | 2 | Solution de stéarylamine à 30 % dans l'huile | 1000 | 15 | 100 |
| | | | | tétraalkylnaphtalène sulfonate de monoéthanolamine | 400 | 14 | |
| 2 nitrate d'ammonium titre 26 % | Composition n° 1 | 1200 | 3 | solution d'amine grasse dans l'huile à 25 % | 1000 | 15 | 100 |
| 3 N.P.K. 15/11/22 | Composition n° 1 | 1200 | | argile | 5000 | | |
| | argile | 5000 | 1,2 | tétraalkylnaphtalène sulfonate de monoéthanolamine dans une huile | 400 | 32 | 100 |
| | fuel lourd | 1600 | | fuel lourd | 1600 | | |
| 4 nitrate d'ammonium titre 33,5 % | Composition n° 2 | 1200 | 13 | | | | 100 |
| 5 nitrate d'ammonium titre 33,5 % | Composition n° 3 | 1200 | 3 | solution de stéarylamine à 30 % dans l'huile | 1000 | 20 | 100 |
| 6 nitrate d'ammonium titre 33,5 % | Composition n° 4 | 1200 | 3 | solution de stéarylamine à 30 % dans l'huile | 1000 | 20 | 100 |

**Tableau (suite)**

| Ex. Type d'engrais | Traitement | dose g/t | taux de mottage % | Echantillon-témoin | dose g/t | taux de mottage % | taux de mottage du témoin d'engrais non traité |
|---|---|---|---|---|---|---|---|
| | argile | 3000 | | argile | 5000 | | |
| 7 N.P.K. 15/11/22 | Composition n° 1 | 1200 | 12,5 | tétraalkylnaphtalène sulfonate de monoéthanolamine dans une huile | 400 | 32 | 100 |
| | | | | fuel lourd | 1600 | | |
| | | | | argile dopée à la stéarylamine fuel lourd | 6000<br>2000 | 13,5 | |
| | Composition n° 1 | 1200 | | argile | 5000 | | |
| 8 N.P.K. 15/11/22 | talc | 5000 | 1,2 | tétraalkylnaphtalène sulfonate de monoéthanolamine dans une huile | 400 | 32 | 100 |
| | fuel lourd | 1600 | | fuel lourd | 1600 | | |
| | | | | argile dopée à la stéarylamine fuel lourd | 6000<br>2000 | 13,5 | |
| 9 nitrate d'ammonium titre 33,5 % | silicate de soude de rapport $SiO_2/Na_2O$ = 3,5 et d'E.S. = 35 %<br>"GALORYL AT WO 60" | 1000<br>600 | 6 | solution commerciale d'huile aminée à 25 % | 1000 | 9 | 100 |
| 10 nitrate d'ammonium titre 33,5 % | silicate de soude de rapport $SiO_2/Na_2O$ = 3,5 et d'E.S. = 35 %<br>acide stéarique | 1000<br>400 | 33 | | | | 100 |
| 11 nitrate d'ammonium titre 33,5 % | sulfate d'alcool $C_{12}$-$C_{14}$ oxyéthyléné 3 OE + silicate de soude de rapport $SiO_2/Na_2O$ = 2,1 ES solution 30 % | 1200 | 6 | | | | 100 |
| 12 nitrate d'ammonium itre 33,5 % | Composition n° 5 | 1300 | 5 | | | | 100 |
| 13 nitrate d'ammonium titre 33,5 % | Composition n° 6 | 1200 | 24 | | | | 100 |
| 14 nitrate d'ammonium titre 33,5 % | Composition n° 7 | 800 | 28 | solution de stéarylamine à 20 % dans l'huile | 1000 | 40 | 100 |
| 15 N.P.K. 15/12/24 | Composition n° 7<br>argile<br>fuel lourd | 1200<br>5000<br>1600 | 2 | argile<br>tétraalkylnaphtalène sulfonate de monoéthanolamine<br>fuel lourd | 5000<br>400<br>1600 | 10,2 | 100 |
| 16 nitrate d'ammonium titre 33,5 % | Composition n° 8 | 1300 | 34 | tétraalkylnaphtalène sulfonate de monoéthanolamine dans une cire | 400 | 100 | 100 |
| 17 nitrate d'ammonium titre 33,5 % | Composition n° 9 | 1500 | 45 | huile aminée | 1200 | 100 | 100 |
| 18 nitrate d'ammonium titre 26 % | Composition n° 9 | 1400 | 70 | kieselguhr<br>dialkylnaphtalène sulfonate de sodium E.S. = 35 %<br>talc | 25000<br>1200<br>5000 | | |
| 19 N.P.K. 17/1/17 | Composition n° 9<br>argile<br>fuel lourd | 1200<br>5000<br>1600 | 6,5 | argile<br>tétraalkylnaphtalène sulfonate de monoéthanolamine<br>fuel lourd | 5000<br>400<br>1600 | 28 | 100 |
| 20 nitrate d'ammonium titre 33,5 % | Composition n° 10 | 2000 | 50 | cire microcristalline<br>amine grasse | 700<br>700 | 95 | 100 |
| 21 nitrate d'ammonium titre 33,5 % | Composition n° 11 | 1000 | 20 | solution de stéarylamine à 20 % dans l'huile | 1000 | 40 | 100 |
| 22 N.P.K. 17/17/17 | - solution de silicate de soude ($SiO_2/Na_2O$ = 2,1) et d'extrait sec 40 %<br>- argile<br>- solution C<br>- solution de silicate de soude ($SiO_2/Na_2O$ = 3,5) et d'extrait | 800<br>3000<br>2000 | 15 | | | | 100 |

Tableau (suite)

| Ex. | Type d'engrais | Traitement | dose g/t | taux de mottage % | Echantillon-témoin | dose g/t | taux de mottage % | taux de mottage du témoin d'engrais non traité |
|---|---|---|---|---|---|---|---|---|
| 23 | nitrate d'ammonium titre 33,5 % | sec 35 % | 1000 | 15 | - solution de stéarylamine à 20 % dans l'huile | 2000 | 60 | 100 |
| | | - solution C | 1000 | | | | | |
| | | - solution de silicate de soude ($SiO_2/Na_2O$ = 2,1) et d'extrait | | | | | | |
| 24 | N.P.K. 17/17/17 | sec 40 % | 800 | | - argile dopée à 3 % de stéarylamine | 7000 | 40 | 100 |
| | | - argile | 3000 | 0 | - fuel lourd n° 2 | 2000 | | |
| | | - solution D | 2000 | | | | | |

*E.S. = extrait sec

## Revendications

1. Procédé pour l'antimottage des sels ou des engrais non pulvérulents, caractérisé par le fait que l'on pulvérise sur les particules constitutives de l'engrais, après séchage et avant stockage, à un moment où lesdites particules sont sous leur forme définitive et ont acquis la presque totalité de leurs propriétés mécaniques finales:

- soit une solution aqueuse de silicate alcalin ou d'amine dont la teneur en matières sèches est de 15 à 60 %, de préférence de 25 à 40 % en poids, en une quantité d'environ 0,8 à 1 pour mille en poids par rapport à l'engrais traité, cette application étant précédée ou suivie d'une application de tensio-actif anionique en solution aqueuse ou huileuse en une quantité d'environ 1 à 2 pour mille en poids par rapport à l'engrais traité,
- soit une solution aqueuse de silicate alcalin ou d'amine comprenant un tensio-actif an ionique sous forme de sel alcalin ou d'amine, la quantité de solution appliquée étant de 0,6 à 1,6 pour mille en poids par rapport à l'engrais, la proportion maximum de silicate apportée étant celle apportée par une solution aqueuse de silicate alcalin ou d'amine comportant un tensio-actif anionique sous forme de sel alcalin ou d'amine, cette solution contenant 90 % de solution de silicate alcalin ou d'amine d'une teneur en matières sèches de 60 %, la quantité de solution (silicate + tensio-actif) étant de 1,6 pour mille en poids par rapport à l'engrais, soit une proportion de 0,864 pour mille en poids de silicate sec par rapport à l'engrais,
- soit un des produits précédents, associé à une huile ou à un fuel et/ou éventuellement à un enrobant minéral inerte.

2. Composition pour l'antimottage des sels ou des engrais non pulvérulents, caractérisée par le fait qu'elle est à base d'une solution aqueuse d'un silicate alcalin ou d'amine d'une teneur en matières sèches de 15 à 60 %, de préférence de 25 à 40 % en poids, et d'au moins un tensio-actif anionique sous forme de solution aqueuse ou huileuse, les proportions respectives pondérales de silicate et de tensio-actif exprimées en matière sèche étant de 10/90 à 90/10.

3. Procédé selon la revendication 1, caractérisé par le fait que l'engrais traité est du nitrate d'ammonium de titre d'azote compris entre 33,0 et 34,8 %, l'humidité du grain étant inférieure à 1 %, de préférence inférieure à 0,5 % et généralement comprise entre 0,1 et 0,4 %, la température étant inférieure à 80°C, de préférence inférieure à 40°C et, plus préférentiellement encore, inférieure à 32°C.

4. Procédé selon la revendication 1, caractérisé par le fait que l'engrais traité est du nitrate d'ammonium de titre d'azote inférieur à 33,5 %, l'humidité du grain étant inférieure à 2 % et, de préférence comprise entre 0,1 et 1 %.

5. Procédé selon la revendication 1, caractérisé par le fait que l'engrais traité est du N.P.K. d'humidité comprise entre 0,1 et 3 %, de préférence entre 0,2 et 1 %, la température étant inférieure à 80°C.

6. Procédé selon l'une des revendications 1 et 3 à 5, caractérisé par le fait que la quantité d'huile, de cire ou de fuel appliquée est de 0,2 à 8 pour mille, de préférence de 0,6 à 2 pour mille en poids par rapport à l'engrais traité.

7. Procédé selon l'une des revendications 1 et 3 à 6, caractérisé par le fait que la quantité appliquée d'enrobant minéral inerte qui est choisi dans le groupe comprenant le talc, le kaolin, le kieselguhr, des argiles, des terres d'infusoires, des silico-aluminates, est de 1 à 35 pour mille, de préférence de 2 à 8 pour mille par rapport à l'engrais traité.

8. Procédé selon la revendication 1 ou l'une des revendications 3 à 7, caractérisé par le fait que le tensio-actif choisi est un tensio-actif alkylaryl-sulfonique sous forme de sel alcalin, alcalino-terreux ou d'alcoylamine, cycloalcoylamine, amine aromatique, l'amine ayant de 2 à 24 atomes de carbone.

9. Procédé selon la revendication 1 ou l'une des revendications 3 à 8, caractérisé par le fait que le tensio-actif est choisi parmi les polyalkylnaphtalène sulfonates d'alcalin, d'alcalino-terreux ou d'alcoylamine, cycloalcoylamine, amine aromatique, l'amine ayant de 2 à 24 atomes de carbone.

10. Composition selon la revendication 2, caractérisée par le fait que le tensio-actif choisi est un tensio-actif alkylarylsulfonique sous forme de sel alcalin, alcalino-terreux ou d'alcoylamine, cycloalcoylamine, amine aromatique, l'amine ayant de 2 à 24 atomes de carbone.

11. Composition selon la revendication 10, caractérisée par le fait que le tensio-actif est choisi parmi les polyalkylnaphtalène sulfonate d'alcalin, d'alcalino-terreur ou d'alcoylamine, cycloalcoylamine, amine aromatique, l'amine ayant de 2 à 24 atomes de carbone.

12. Composition selon l'une des revendications 2, 10 et 11, caractérisée par le fait qu'elle comporte une quantité efficace de fuel, de cire, de paraffine, de vaseline ou d'huile.

13. Composition selon la revendication 12, caractérisée par le fait qu'elle se présente sous la forme d'une émulsion huile dans l'eau, les constituants de cette émulsion étant:

- 1,6 à 21,6 % sur sec de silicate alcalin ou d'amine,
- 21,6 à 1,6 % sur sec de tensio-actif,
- 40 à 60 % de fuel, cire ou huile,

le complément à 100 étant constitué par de l'eau.

14. Composition selon la revendication 2, caractérisée par le fait qu'elle comporte un silicate alcalin de rapport $SiO_2/Na_2O$ de 2 à 4.

15. Composition selon la revendication 10 ou 11, caractérisée par le fait que l'amine est une amine grasse, telle que la stéarylamine.

16. Composition selon la revendication 10 ou 11, caractérisée par le fait que l'ami ne est la monoéthanolamine.

17. Composition selon la revendication 10, 11 ou 15, caractérisée par le fait qu'elle est associée à de l'acide stéarique ou à un de ses savons.

18. Composition selon la revendication 10, 11, 15 ou 16, caractérisée par le fait que les tensio-actifs sont choisis parmi les mono-, di-, tri-, tétra-, propyl- ou isopropyl-, butyl- ou isobutyl-naphtalène, méthylnaphtalène sulfonates.

**Patentansprüche**

1. Verfahren zur Verhinderung des Klumpens von nicht pulverigen Düngemittelsalzen oder Düngemitteln, dadurch gekennzeichnet, daß man auf den das Düngemittel zusammensetzenden Teilchen, nach dem Trocknen und vor der Lagerung, nämlich zu einem Zeitpunkt, zu welchem die genannten Teilchen in ihrer endgültigen Form vorliegen und fast die Gesamtheit ihrer endgültigen mechanischen Eigenschaften erworben haben, versprüht:

- entweder eine wäßrige Lösung eines Alkalimetallsilikates oder eines Aminsilikates, deren Gehalt an Trockensubstanz 15 bis 60 Gew.-%, vorzugsweise 25 bis 40 Gew.-%, beträgt, und zwar in einer Menge von etwa 0,8 bis 1 Gew.-Teilen pro 1.000 Gewichtsteilen des behandelten Düngemittels, wobei entweder vor oder nach diesem Aufsprühen ein anionisches grenzflächenaktives Mittel in wäßriger oder öliger Lösung in einer Menge von etwa 1 bis 2 Gew.-Teilen pro 1.000 Gew.-Teilen des behandelten Düngemittels aufgebracht wird;
- oder eine wäßrige Lösung eines Alkalimetallsilikates oder Aminsilikates, welche ein anionisches grenzflächenaktives Mittel in der Form eines Alkalisalzes oder Amins enthält, wobei die Menge der aufgebrachten Lösung 0,6 bis 1,6 Gew.-Teile pro 1.000 Gew.-Teile des behandelten Düngemittels beträgt, und wobei der maximal zugefügte Mengenanteil des Silikates derjenige ist, der von einer wäßrigen Lösung eines Alkalimetallsilikates oder Aminsilikates zugefügt wird, welche Lösung ein anionisches grenzflächenaktives Mittel in der Form eines Alkalisalzes oder Amins enthält, und wobei diese Lösung zu 90 % aus einer Lösung eines Alkalimetallsilikates oder eines Aminsilikates mit einem Gehalt an Trockensubstanz von 60 % besteht, und wobei die Menge der Lösung (Silikat + grenzflächenaktives Mittel) 1,6 Gew.-Teile pro 1.000 Gew.-Teile des Düngemittels beträgt, was einem Mengenanteil von 0,864 Gew.-Teilen Trockensilikat pro 1.000 Gew.-Teile des Düngemittels entspricht;
- oder eines der vorstehenden Produkte, welches mit einem Öl oder Heizöl und/oder gegebenenfalls mit einem inerten, mineralischen Umhüllungsmittel assoziiert ist.

2. Zusammensetzung zur Verhinderung des Klumpens von nicht pulverigen Düngemittelsalzen oder Düngemitteln, dadurch gekennzeichnet, daß sie auf der Basis einer wäßrigen Lösung eines Alkalimetallsilikates oder eines Aminsilikates mit einem Gehalt an Trockensubstanz von 15 bis 60 Gew.-%, vorzugsweise von 25 bis 40 Gew.-%, und wenigstens eines anionischen grenzflächenaktiven Mittels in der Form einer wäßrigen oder öligen Lösung vorliegt, wobei die jeweiligen Gewichtsverhältnisse von Silikat und grenzflächenaktivem Mittel, als Trockensubstanz ausgedrückt, 10/90 bis 90/10 betragen.

3. Verfahren nach Anspruch 1, dadurch gekennzeichnet, daß das behandelte Düngemittel Ammoniumnitrat mit einem zwischen 33,0 und 34,8 % liegenden Stickstoffgehalt ist, daß der Feuchtigkeitsgehalt der Körner weniger als 1 %, vorzugsweise weniger als 0,5 % beträgt und im allgemeinen zwischen 0,1 % und 0,4 % liegt, und daß die Temperatur unter 60°C, vorzugsweise unter 40°C und in noch höher bevorzugtem Maße unter 32°C liegt.

4. Verfahren noch Anspruch 1, dadurch gekennzeichnet, daß das behandelte Düngemittel Ammoniumnitrat mit einem unter 33,5 % liegenden Stickstoffgehalt ist, daß der Feuchtigkeitsgehalt der Körner unter 2 % beträgt und vorzugsweise zwischen 0,1 und 1 % liegt.

5. Verfahren nach Anspruch 1, dadurch gekennzeichnet, daß das behandelte Düngemittel ein N.P.K.-Düngemittel mit einem zwischen 0,1 und 3 %, vorzugsweise zwischen 0,2 und 1 % liegenden Feuchtigkeitsgehalt ist und daß die Temperatur unter 80°C liegt.

6. Verfahren noch eine der Anspruche 1 und 3 bis 5, dadurch gekennzeichnet, daß die aufgebrachte Menge an Öl, Wachs oder Heizöl 0,2 bis 8 Gewichtsteile, vorzugsweise 0,6 bis 2 Gew.-Teile, pro 1.000 Gew.-Teile des behandelten Düngemittels beträgt.

7. Verfahren noch einem der Ansprüche 1 und 3 bis 6, dadurch gekennzeichnet, daß die aufgebrachte Menge an inertem, mineralischem Umhüllungsmittel, welches aus der Talk, Kaolin, Kieselgur, Tone, Infusorienerden und Aluminosilikate umfassenden Gruppe ausgewählt ist, bis 35 Gew.-Teile, vorzugsweise 2 bis 8 Gew.-Teile pro 3.000 Gew.-Teile des behandelten Düngemittels beträgt.

8. Verfahren nach Anspruch 1 oder nach einem der Ansprüche 3 bis 7, dadurch gekennzeichnet, daß das gewählte grenzflächenaktive Mittel ein Alkylarylsulfonsäure-grenzflächenaktives Mittel in der Form des Alkalimetallsalzes, des Erdalkalimetallsalzes oder eines Alkylamins, Cycloalkylamins oder aromatischen Amins ist, wobei das Amin 2 bis 24 Kohlenstoffatome enthält.

9. Verfahren nach Anspruch 1 oder einem der Ansprüche 3 bis 8, dadurch gekennzeichnet, daß das grenzflächenaktive aus Alkalimetall-, Erdalkalimetall-, Alkylamin-, Cycloalkylamin- oder (aromatischen Amin)-polyalkylnaphthalinsulfonaten, wobei das 2 bis 24 Kohlenstoffatome enthält, ausgewählt ist.

10. Zusammensetzung nach Anspruch 2, dadurch gekennzeichnet, daß das gewählte grenzflächenaktive Mittel ein Alkylarylsulfonsäure-grenzflächenaktives Mittel in der Form des Alkalimetallsalzes, des Erdalkalimetallsalzes oder eines Alkylamins, Cycloalkylamins oder aromatischen Amins ist, wobei das Amin 2 bis 24 Kohlenstoffatome enthält.

11. Zusammensetzung nach Anspruch 10, dadurch gekennzeichnet, daß das grenzflächenaktive aus Alkalimetall-, Erdalkalimetall-, Alkylamin-, Cycloalkylamin- oder (aromatischen Amin)-polyalkylnaphthalinsulfonaten, wobei das Amin 2 bis 24 Kohlenstoffatome enthält, ausgewählt ist.

12. Zusammensetzung nach einem der Ansprüche 2, 10 und 11, dadurch gekennzeichnet, daß sie eine wirksame Menge an Heizöl, Wachs, Paraffin, Vaselin oder Öl enthält.

13. Zusammensetzung nach Anspruch 12, dadurch gekennzeichnet, daß sie in der Form einer Emulsion von Öl in Wasser vorliegt, wobei die Bestandteile dieser Emulsion die folgenden sind:

- 1,6 bis 21,6 %, bezogen auf die Trockensubstanz, an einem Alkalimetall- oder Aminsilikat;
- 21,6 bis 1,6 %, bezogen auf die Trockensubstanz, an grenzflächenaktivem Mittel;
- 40 bis 60 % an Heizöl, Wachs oder Öl,

wobei der Rest auf 100 aus Wasser besteht.

14. Zusammensetzung nach Anspruch 2, dadurch gekennzeichnet, daß sie Alkalimetallsilikat mit einem Verhältnis von $SiO_2/Na_2O$ von 2 bis 4 enthält.

15. Zusammensetzung nach Anspruch 10 oder 11, dadurch gekennzeichnet, daß das Amin ein Fettamin, wie Stearylamin, ist.

16. Zusammensetzung nach Anspruch 10 oder 11, dadurch gekennzeichnet, daß das Amin Monoethanolamin ist.

17. Zusammensetzung nach Anspruch 10, 11 oder 15, dadurch gekennzeichnet, daß sie mit Stearinsäure oder mit einer von deren Seifen assoziiert ist.

18. Zusammensetzung nach Anspruch 10, 11, 15 oder 16, dadurch gekennzeichnet, daß die grenzflächenaktiven Mittel aus Mono-, Di-, Tri-, Tetra-, -propyl- oder -isopropyl-, -butyl- oder -isobutyl-naphthalin- bzw. -methylnaphtalinsulfonaten ausgewählt sind.

**Claims**

1. Process for the anticlumping of non-powdery salts and fertilizers, characterized by the fact that there is sprayed onto the constituent particles of the fertilizer, after drying and before storage, at a moment when said particles are in their final form and have acquired almost the whole of their final mechanical properties:

- either an aqueous solution of alkali or amine silicate whose content of dry matter is from 15 to 60 % by weight, preferably from 25 to 40 % by weight, in an amount of about 0.8 to 1 per thousand by weight with respect to the fertilizer to be treated, this application being preceded or followed by an application of an anionic surfactant in aqueous or oily solution in an amount of about 1 to 2 per thousand by weight with respect to the fertilizer to be treated,
- or an aqueous solution of alkali or amine silicate comprising an anionic surfactant in the form of an alkali or amine salt, the amount of solution applied being from 0.6 to 1.6 per thousand by weight with respect to the fertilizer, the maximum proportion of silicate introduced being the one introduced by an aqueous solution of alkali or amine silicate comprising an anionic surfactant in the form of alkali or amine salt, this solution containing 90 % of a solution of alkali or amine silicate whose content of dry matter is 60 %, the amount of solution (silicate + surfactant) being from 1.6 per thousand by weight with respect to the fertilizer, i.e. a proportion of 0.864 per thousand by weight of dry silicate with respect to the fertilizer,
- or one of the preceding products, associated with an oil or with a fuel and/or if necessary with an inert mineral coating agent.

2. Composition for the anticlumping treatment of non-powdery salts and fertilizers, characterized by the fact that it is based on an aqueous solution of an alkali or amine silicate whose content of dry matter is from 15 to 60 %, preferably from 25 to 40 % by weight, and on at least one anionic surfactant in the form of an aqueous or oily solution, the respective proportions by weight of silicate and of surfactant expressed in dry matter being 10/90 to 90/10.

3. Process according to claim 1, characterized by the fact that the fertilizer to be treated is ammonium nitrate having a nitrogen titer comprised between 33.0 and 34.8 %, the moisture of the grain being less than 1 %, preferably less than 0.5 % and generally comprised between 0.1 and 0.4 %, the temperature being less than 800C, preferably less than 40°C and, still more preferably, less than 32°C.

4. Process according to claim 1, characterized by the fact that the fertilizer to be treated is ammonium nitrate having a nitrogen titer less than 33.5 %, the moisture of the grain being less than 2 % and preferably comprised between 0.1 and 1 %.

5. Process according to claim 1, characterized by the fact that the fertilizer to be treated is N.P.K. having a moisture comprised between 0.1 and 3 %, preferably between 0.2 and 1 %, the temperature being less than 80°C.

6. Process according to one of claims 1 and 3 to 5, characterized by the fact that the applied amount of oil, wax or fuel is from 0.2 to 8 per thousand, preferably from 0.6 to 2 per thousand by weight with respect to the fertilizer to be treated.

7. Process according to one of claims 1 and 3 to 6, characterized by the fact that the applied amount of inert mineral coating agent which is selected from the group comprising talc, kaolin, kieselguhr, clays, infusorial earths and silicoaluminates, is from 1 to 35 per thousand, preferably from 2 to 8 per thousand with respect to the fertilizer to be treated.

8. Process according to claim 1 or to one of claims 3 to 7, characterized by the fact that the selected surfactant is an alkylarylsulfonic surfactant in the form of an alkali, alkaline-earth, alkylamine, cycloalkylamine or aromatic amine salt, the amine having from 2 to 24 carbon atoms.

9. Process according to claim 1 or to one of claims 3 to 8, characterized by the fact that the surfactant is selected from among the alkali, alkaline-earth or alkylamine, cycloalkylamine, aromatic amine polyalkylnaphtalene sulfonates, the amine having from 2 to 24 carbon atoms.

10. Composition according to claim 2, characterized by the fact that the selected surfactant is an alkylarylsulfonic surfactant in the form of an alkali, alkaline-earth, alkylamine, cycloalkylamine or aromatic amine salt, the amine having from 2 to 24 carbon atoms.

11. Composition according to claim 10, characterized by the fact that the surfactant is selected from among the alkali, alkaline-earth or alkylamine, cycloalkylamine, aromatic amine polyalkylnaphtalene sulfonates, the amine having from 2 to 24 carbon atoms.

12. Composition according to one of claims 2, 10 and 11, characterized by the fact that it comprises an effective amount of fuel, wax, paraffin, vaseline or oil.

13. Composition according to claim 12, characterized by the fact that it is in the form of an "oil-in-water" emulsion, the constituents of this emulsion being:

- 1.6 to 21.6 % on dry matter of alkali or amine silicate,
- 21.6 to 1.6 % on dry matter of surfactant,
- 40 to 60% of fuel, wax or oil,

the complement to 100 being constituted by water.

14. Composition according to claim 2, characterized by the fact that it comprises an alkali silicate having a ratio $SiO_2/Na_2O$ from 2 to 4.

15. Composition according to claim 10 or 11, characterized by the fact that the amine is a fatty amine, such as stearylamine.

16. Composition according to claim 10 or 11, characterized by the fact that the amine is monoethanolamine.

17. Composition according to claim 10, 11 or 15, characterized by the fact that it is associated with stearic acid or with one of its soaps.

18. Composition according to claim 10, 11, 15 or 16, characterized by the fact that the surfactants are selected from among mono-, di-, tri-, tetra-, propyl- or isopropyl-, butyl- or isobutyl-naphtalene, methylnaphtalene sulfonates.